# EUROPEAN PATENT APPLICATION

(11) **EP 0 883 224 A1**
(43) Date of publication of application: **09.12.1998**
(21) Application number: 98109968.2
(22) Date of filing: 02.06.1998
(51) Int. Cl.: H02J 7/14

(54) **A power supply system for electric loads on board a vehicle provided with an internal combustion engine**

(30) Priority: 03.06.1997 IT TO970482
(71) Applicant: MAGNETI MARELLI S.p.A., 20145 Milano (IT)
(72) Inventor: Di Sciuva, Marco, 10155 Torino (IT); Negro, Luciano, 10046 Poirino (Torino) (IT)
(74) Representative: Quinterno, Giuseppe

(57) **Abstract**

The system comprises a ground conductor (GND) to which are connected respective terminals of the said loads (4, 5), an alternating current generator (1) of rotating magnet type having a stator winding (L1), a control unit (ECU) and switching devices (7,8, 13-16) controlled by this unit to control the connection of the generator (1) to the AC loads (5), to the DC loads (4) and to the battery (3) in a predetermined manner.

The stator winding (L1) of the generator (1) is connected in series with the non-grounded terminals of the DC loads (4) and with the other pole of the battery (3) via first rectifier means (2), and with the non-grounded terminals of the AC loads (5).

## Description

The present invention relates to a power supply system for electric loads on board a vehicle provided with an internal combustion engine.

More specifically the invention relates to a power supply system comprising
a ground conductor to which respective terminals of the said loads are connected;
a battery having one pole connected to the ground conductor;
an alternating current electric generator of the rotating magnet type having a single stator winding,
an electronic control unit, and
electronic switching means controlled by the said control unit in order to control the connection of the said winding of the generator to alternating current loads, direct current loads and the battery in a predetermined manner.

The power supply system of the invention is characterised in that a first terminal of the said stator winding of the generator is connected in series to the non-grounded terminals of the direct current loads and to the other pole of the battery via first rectifier means, and its other terminal is connected to the non-grounded terminals of the alternating current loads, in such a way that the said loads and the battery can be supplied, even simultaneously, when first voltage half-waves develop between the said first terminal and the said other terminal of the stator winding, having the same predetermined sign.

According to another characteristic of the invention, in a system further comprising an ignition circuit of the capacitive discharge type connected between a supply input and the ground conductor and coupled to at least one spark plug of the engine, the said winding of the generator is further connected in series between the ground conductor and the supply input of the said ignition circuit via second rectifier means in such a way that the ignition circuit can be supplied during second voltage half-waves, between the terminals of the stator winding, of opposite sign to that of the said first half-waves.

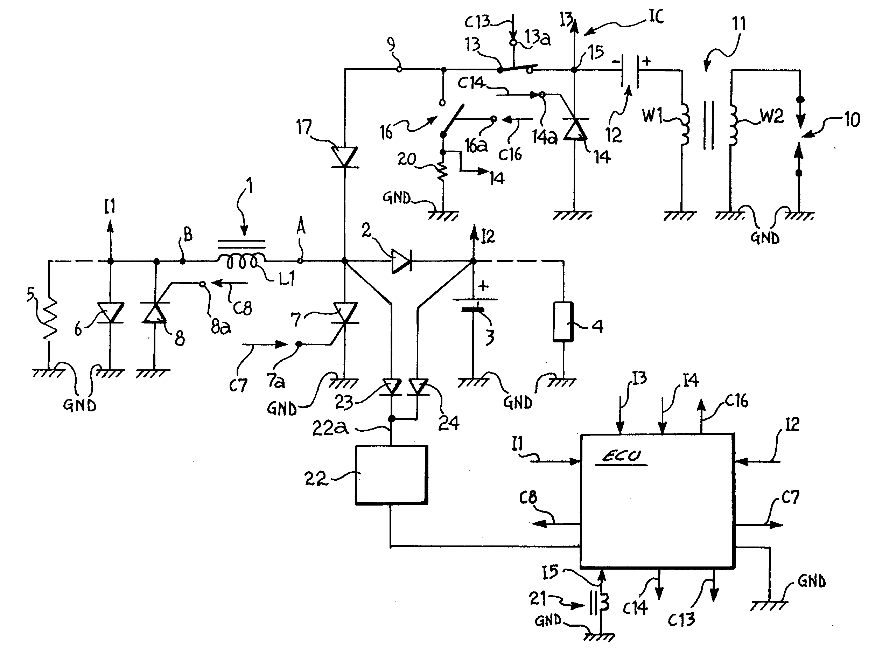

Further characteristics and advantages of the invention will become apparent from the detailed description which follows, given purely by way of non-limitative example with reference to the appended drawing, in which is shown a circuit diagram, partially in block diagram form, of a power supply system according to the invention.

With reference to this drawing, the power supply system shown there comprises an alternating current electric generator 1 of the rotating magnet type, with a single stator winding L1.

The winding L1 has a terminal A connected via a diode 2 to the positive pole of an accumulator battery 3 the negative pole of which is connected to a ground conductor GND. The positive pole of the battery 3 is connected or connectable to direct current loads connected to the ground conductor, only one of which has been shown in the drawing, for simplicity, where it is indicated 4.

The other terminal B of the stator winding L1 of the generator is further connected or connectable to first terminals of alternating current loads the other terminals of which are connected to the ground conductor GND. For simplicity in the drawing a single alternating current load is illustrated, identified by way of example as a resistor 5.

A diode 6 has its anode connected to the terminal B of the winding L1 and its cathode connected to the ground conductor GND. This diode is in fact essentially connected in parallel to the alternating current loads 5.

The reference numeral 7 indicates a first unidirectionally conductive electronic switch connected between the terminal A of the winding L1 and the ground conductor. This device is able to allow a flow of current towards the ground conductor when it receives a command signal at its control input 7a.

The device 7 can for example be an SCR (Silicon Controlled Rectifier).

A further undirectionally conductive electronic switch device 8 provided with a control input 8a is disposed between the ground conductor GND and the terminal B of the stator winding L1 of the generator. This device is able to allow a flow of current away from the ground conductor.

The device 8 may also be, for example, an SCR.

Alternatively, the device 8 may be a transistor of the NMOS type, and in this case the diode 6 can conveniently be constituted by the intrinsic parasitic diode of such a transistor.

The stator winding L1 of the generator 1 is thus connected essentially in series between the alternating current loads 5 on one side and the battery 3 and the direct current loads 4 on the other. This winding is moreover essentially connected in series with the electronic switch devices 7 and 8.

The reference ECU indicates an electronic control unit, formed for example by means of a microprocessor. This unit has two outputs C7 and C8 connected to the control inputs 7a and 8a of the devices 7 and 8 respectively.

The reference IC generally indicates an ignition circuit of the capacitive discharge type, connected between a supply input 9 and the ground conductor GND. This circuit is coupled to a spark plug 10 of the engine (not illustrated) of the motor vehicle.

The ignition circuit IC comprises an ignition transformer 11 with a primary winding W1 and a secondary winding W2. This latter is connected between the ground conductor GND and the spark plug 10.

The non-grounded terminal of the primary winding W1 is connected to a first plate of a capacitor 12 the other plate of which is connected to the supply terminal 9 via a normally closed, that is normally conductive, electronic switch 13 having a control input 13a connected to an output C13 of the control unit ECU.

A further unidirectional electronic switch 14 such as, for example, an SCR, is disposed between the ground conductor and a node 15 to which the switch 13 and the capacitor 12 are connected. When it is conductive the switch 14 allows a flow of current away from the ground conductor and is provided with a control input 14a connected to an output C14 of the control unit ECU.

A further electronic switch 16 is connected between the terminal 9 of the ignition circuit and the ground conductor GND, in series with a resistor 20. This switch has a control input 16a connected to an output C16 of the control unit ECU.

The supply input 9 of the ignition circuit IC is connected to the terminal A of the stator winding L1 of the generator 1 via a diode 17. In the illustrated embodiment the anode of the diode 17 is connected to the terminal 9 its the cathode is connected to the winding L1 of the generator.

The electronic control unit ECU has an input I1 connected to the terminal B of the stator winding L1. In operation the unit ECU receives a signal at the input I1 indicative of the value of the voltage across the alternating current loads 5.

A further input I2 of the unit ECU is connected to the positive pole of the battery 3.

Further inputs I3 and I4 of the unit ECU are connected to the node 15 and to the non-grounded terminal of the resistor 20 of the ignition circuit IC.

The unit ECU has a further input I5 to which a sensor 21 is connected which is able to provide a signal indicative of the speed of rotation of the internal combustion engine of the motor vehicle. The sensor 21 may be constituted by a pickup able to detect the passage of a peripheral radial tooth of the rotor of the generator 1.

The reference numeral 22 indicates a power supply circuit intended to provide the unit ECU with the necessary stabilised DC supply voltage.

The power supply circuit 22 has in turn a supply terminal 22a connected to the terminal A of the stator winding L1 of the generator 1 and to the positive pole of the battery 3 via two diodes 23 and 24 connected substantially in the form of an OR circuit.

The control unit ECU is prearranged to operate in the following modes of operation.

In operation an alternating voltage having alternate positive and negative half-waves develops between the terminals A and B of the stator winding L1 of the generator 1.

In the following the terminal A of the stator winding L1 will be assumed as the positive terminal, and the terminal B will be assumed as the negative terminal.

When it is necessary to supply the alternating current loads 5 the unit ECU maintains the switch device 8 non-conductive. Similarly, when it is necessary to supply a current to the battery 3 and to the direct current loads 4, the unit ECU maintains the controlled conduction device 7 non-conductive.

When both the controlled conduction devices 7 and 8 are non-conductive the positive half-waves of the voltage developed across the stator winding L1 of the generator cause current to flow from the ground conductor towards the alternating current loads 5, then through the winding L1 itself, then through the diode 2, and finally this current returns to the ground conductor through the battery 3 and the direct current loads 4.

The unit ECU can regulate the voltage applied to the alternating current loads 5 by switching the conduction state of the device 8, which short circuits these loads, when the effective voltage on the said loads 5 reaches a predetermined threshold.

Similarly, the unit ECU can regulate the voltage applied to the battery 3 and to the direct current loads 4 by rendering the device 7 conductive when this voltage exceeds a predetermined value.

It is observed that the regulation of the voltages applied to the alternating current loads and to the direct current loads respectively can be achieved by the unit ECU independently.

When the controlled conduction device 7 is conductive the terminal A of the winding L1 of the generator 1 is essentially short circuited to the ground conductor GND. In this condition the supply circuit 22 associated with the unit ECU can nevertheless receive a supply current from the battery 3 through the diode 24.

The unit ECU can moreover be conveniently arranged to detect the possible disconnection of the positive pole of the battery 3 from the circuit on the basis of an analysis of the signal provided to its input I2. In such a condition the unit ECU acts to maintain the controlled conduction device 7 in the switched-off condition so that the supply circuit 22 can nevertheless receive a supply of current from the stator winding L1 of the generator via the diode 23 or through the diodes 2 and 24.

The ignition circuit IC is supplied during the negative half-waves of the voltage developed across the terminals A and B of the winding L1 of the generator. During the negative half-waves of this voltage no current is provided to the loads 4 and 5 or to the battery 3. The unit ECU causes closure of the switch 16 so that a current can flow from the ground conductor through the resistor 20, then through the switch 16, the diode 17, the winding L1 of the generator, and then back through the diode 6 to the ground conductor. There is therefore an accumulation of energy in the inductance of the winding L1. On the basis of the signal provided at its input I4, the unit ECU detects the achievement of a predetermined threshold by the current flowing in the winding L1 whilst the switch 16 is closed. When this threshold is reached the unit ECU causes the switch 16 to open and an overvoltage is generated across the terminals of the winding L1 of the generator which causes a partial charging of the ignition capacitor 12 through the switch device 13 which is normally closed.

The unit ECU monitors the voltage reached on the capacitor 12 by analysing the signal applied to its input I3.

After a certain number of commutations of the switch 16 the voltage on the ignition capacitor 12 reaches a predetermined value sufficient to trigger a spark in the spark plug 10. In this condition the unit ECU now causes the device 14 to become conductive as soon as the sensor 21 provides a signal to this unit indicating movement of the piston in the cylinder associated with the spark plug 10 past the upper dead centre point. On the basis of this information the unit ECU then triggers conduction in the device 14 and consequent discharge of the capacitor 12 into the primary winding W1 of the ignition transformer 11 thus causing a spark in the spark plug 10.

When the unit ECU triggers conduction in the device 14, this unit also causes the electronic switch 13 to open. This operation is appropriate in that if the switch 13 remained closed and the discharge of the capacitor 12 were to take place during a negative half-wave of the voltage generated by the generator 1, the winding L1 of this generator would be short-circuited towards the ground conductor and there would be a waste of energy as well as a considerable stressing of the ignition circuit.

As far as the supply of the alternating current loads 5 is concerned, the unit ECU can be conveniently arranged to make the SCR device 7 conductive when the speed of rotation of the internal combustion engine is less than a predetermined value. In effect generators of the rotating magnet type are generally able to provide a voltage comparable with that of the battery when the internal combustion engine turns at low speed. By maintaining the SCR device 7 conductive whilst the motor turns at low speed it is ensured that the alternating current loads 5 receive supply. In this condition all the voltage generated by the generator 1 is in fact utilised to supply the alternating current loads.

In a variant embodiment (not illustrated) the diode 2 can be replaced by an SCR device or the like, controlled by the unit ECU. The use of an SCR or the like allows the unit to disconnect the battery 3 from the generator 1 if the battery has been connected to the circuit with reversed polarity, a circumstance which the unit ECU can detect on the basis of the signals present at its input I2.

Naturally, the principle of the invention remaining the same, the embodiments and the details of construction can be widely varied with respect to what has been described and illustrated purely by way of non-limitative example, without by this departing from the ambit of the invention as defined in the attached claims.

## Claims

1. A power supply system for electric loads (3, 4, 5) on board a vehicle provided with an internal combustion engine, comprising
a ground conductor (GND) to which respective terminals of the said loads (4, 5) are connected;
an alternating current generator (1) of the rotating magnet type with a single stator winding (L1),
an electronic control unit (ECU) and,
electronic switching means (7, 8, 13-16) controlled by the said control unit to control the coupling of the generator (1) to alternating current loads (5), to direct current loads (4) and to the battery (3) in a predetermined manner;
the system being characterised in that a first terminal (A) of the said stator winding (L1) of the generator (1) is connected in series with the non-grounded terminals of the direct current loads (4) and the other pole of the battery (3) via first rectifier means (2), and the other terminal (B) is connected to the non-grounded terminals of the alternating current loads (5), in such a way that the said loads (4, 5) and the battery (3) can be supplied, even simultaneously, when first voltage half-waves having the same predetermined sign appear between the first terminal (A) and the said other terminal (B) of the stator winding (L1).

2. A system according to Claim 1, further comprising an ignition circuit (IC) of the capacitive discharge type, connected between the supply input (9) and the ground conductor (GND) and coupled to at least one spark plug (10) of the engine, and in which the said electronic switching means (13-16) are further able to control the connection of the generator (1) to the ignition circuit (IC);
the system being characterised by the fact that the said winding (L1) of the generator is further connected in series between the ground conductor (GND) and the supply input (9) of the ignition circuit (IC) via second rectifier means (6, 17) in such a way that the ignition circuit (IC) can be supplied during second half-waves of the voltage developed between the said first terminal (A) and the said other terminal (B) of the stator winding (L1), of opposite sign to that of the said first half-waves.

3. A system according to Claim 1 or Claim 2, in which the negative pole of the battery (3) is connected to the ground conductor (GND) and the loads (4, 5), and the battery (3) can be supplied when positive voltage half-waves appear between the said first terminal (A) and the said other terminal (B) of the said winding (L1).

4. A system according to any preceding claim, characterised in that the said first rectifier means comprises a first diode (2) interposed between a first terminal (A) of the said winding (L1) of the generator (1) and the battery (3).

5. A system according to any of Claims 1 to 3, characterised in that the said first rectifier means comprise an SCR (2) or the like, interposed between a first terminal (A) of the said winding (L1) and the battery (3), a controlled input of the said SCR or the like being controlled by the said control unit (ECU).

6. A system according to Claim 4 or Claim 5 and Claim 2, characterised in that the said second rectifier means comprise a second diode (6) connected in parallel to the alternating current loads (5) and a third diode (17) connected between the said first terminal (A) of the winding (L1) of the generator (1) and the supply input (9) of the ignition circuit (IC).

7. A system according to any preceding claim, characterised in that the said electronic switching means comprise first and second electronic switches (7, 8) connected between the terminals (A, B) of the said winding (L1) of the generator and the ground conductor (GND), one essentially in parallel with the direct current loads (4) and the battery (3), and the other essentially in parallel with the alternating current loads (5).

8. A system according to Claim 7, characterised in that the said unit (ECU) is arranged to render the said first switch (7) conductive when the voltage on the battery (3) exceeds a predetermined value.

9. A system according to Claim 7 or Claim 8, characterised in that the said unit (ECU) is arranged to render the said second switch (8) conductive when the effective value of the voltage on the alternating current loads (5) exceeds a predetermined value.

10. A system according to Claim 4 or Claim 5, in which a DC voltage power supply circuit (22) is associated with the said unit (ECU),
the system being characterised in that a supply terminal (22a) of the said power supply circuit (22) is connected to the said winding (L1) of the generator and the battery (3) via a pair of diodes (23, 24) connected in the form of an OR circuit.

11. A system according to Claims 6 and 7, characterised in that the said second switch (8) is a transistor of NMOS type and the said second diode (6) is constituted by an intrinsic parasitic diode of the said transistor.

12. A system according to any of Claims 7 to 9, characterised in that the said unit (ECU) is arranged to maintain the first switch (7) conductive as long as a signal provided by sensor means (21) detecting the speed of rotation of the engine is indicative of a speed of rotation lower than a predetermined value.
